# EUROPEAN PATENT SPECIFICATION

(11) **EP 3 125 351 B1**
(45) Date of publication and mention of the grant of the patent: **05.06.2019**
(21) Application number: 15769914.1
(22) Date of filing: 26.03.2015
(51) Int. Cl.: H01M 10/0562, H01M 4/139, H01M 4/66, H01M 10/0585, H01M 10/0525

(54) **ALL-SOLID-STATE SECONDARY BATTERY**
FESTKÖRPER-SEKUNDÄRBATTERIE
BATTERIE RECHARGEABLE TOUT SOLIDE

(30) Priority: 28.03.2014 JP 2014067318
(43) Date of publication of application: 01.02.2017
(73) Proprietor: Hitachi Zosen Corporation, Osaka-shi, Osaka 559-8559 (JP)
(72) Inventor: OKAMOTO Kenji, Osaka 559-8559 (JP); TAKANO Yasushi, Osaka 559-8559 (JP)
(74) Representative: Grünecker Patent- und Rechtsanwälte PartG mbB
(86) International application number: PCT/JP2015/059286
(87) International publication number: WO 2015/147122

(56) References cited:
- WO-A1-2011/064842
- JP-A- H09 171 814
- JP-A- 2009 289 534
- JP-A- 2013 105 679
- US-A1- 2012 225 351
- Furukawa Electric Co., Ltd: "F-WS Copper Foil for FPC", , 19 June 2010 (2010-06-19), XP002765037, Retrieved from the Internet: URL:https://www.furukawa.co.jp/foil/produc ts/f-ws.htm [retrieved on 2016-12-07]

## Description

### Technical Field

The present invention relates to an all-solid-state secondary battery.

### Background Art

As information appliances and communication devices such as smartphones, tablets, and laptop computers have increased in functionality in recent years, compact and lightweight secondary batteries usable for many hours with a high level of safety have been strongly requested. Also in the automobile industry, high-power and high-capacity batteries have been developed for electric vehicles and hybrid vehicles. All-solid-state lithium ion secondary batteries (a kind of all-solid-state secondary battery) meeting such a request have particularly received much attention in view of safety.

In an all-solid-state lithium ion secondary battery, electrode materials interposed between a positive electrode current collector and a negative electrode current collector is pressure-molded in order to reduce the grain boundary resistance of an electrode material consisting of particulate matters.

A sulfide inorganic solid electrolyte used as an electrode material particularly has high binding strength and ductility and thus the pressure molding improves adhesion between particles in the electrode material. Moreover, a sulfide inorganic solid electrolyte has lower ionic conductance than an oxide inorganic solid electrolyte and thus the pressure molding is important. Furthermore, the positive electrode current collector and the negative electrode current collector are made of high adhesive materials, thereby reducing an electric resistance between the positive electrode current collector and the negative electrode current collector and the electrode material.

The all-solid-state lithium ion secondary battery, in which a sulfide inorganic solid electrolyte is used as an electrode material, is however warped to the positive side or the negative side by the pressure molding. If the all-solid-state lithium ion secondary battery has a small maximum outside dimension, the amount of curving is negligibly small, and therefore may not be a problem, whereas if the all-solid-state lithium ion secondary battery has a large maximum outside dimension, the amount of curving is disadvantageously large, and therefore may be a problem. Correcting such a warp may crack the electrode material.

An all-solid-state lithium ion secondary battery for preventing such a warp is proposed, in which a positive-electrode active material layer, a solid electrolyte layer, a negative-electrode active material layer, and a negative electrode current collector are stacked on each side of a positive electrode current collector (for example, Patent Literature 1). JP 2009 289534 A relates to an electrode for an all-solid lithium battery.

### Citation List

### Patent Literature

Patent Literature 1: Japanese Patent Laid-Open No. 2001-126756

### Summary of Invention

### Technical Problem

If an all-solid-state secondary battery is a single cell battery, the manufacturing process can be advantageously shortened with simple wiring. However, it is assumed that the all-solid-state lithium ion secondary battery of Patent Literature 1 has a multilayer cell. In other words, unfortunately, the all-solid-state lithium ion secondary battery cannot be a single-cell battery.

An object of the present invention is to provide a single-cell all-solid-state secondary battery capable of suppressing warping.

### Solution to Problem

In order to solve the problem, an all-solid-state secondary battery according to the present invention is defined in claim 1.

### Advantageous Effects of Invention

The all-solid-state secondary battery allows a warp of the positive electrode current collector and the positive electrode layer and a warp of the negative electrode current collector and the negative electrode layer to cancel each other in a single cell, thereby suppressing warping even in a single cell.

### Brief Description of the Drawings

FIG. 1 is a cross-sectional view showing the schematic configuration of an all-solid-state lithium ion secondary battery according to the present invention.
FIG. 2 is a cross-sectional view for explaining warping caused by pressure-molding of a positive electrode layer in the all-solid-state lithium ion secondary battery before pressurization according to the present invention.
FIG. 3 is a cross-sectional view for explaining warping caused by pressure-molding of the positive electrode layer in the all-solid-state lithium ion secondary battery during pressurization according to the present invention.
FIG. 4 is a cross-sectional view for explaining warping caused by pressure-molding of the positive electrode layer in the all-solid-state lithium ion secondary battery after pressurization according to the present invention.
FIG. 5 is a cross-sectional view for explaining warping caused by pressure-molding of the positive electrode layer in the all-solid-state lithium ion secondary battery when a positive electrode current collector and the positive electrode layer have low adhesion not according to the present invention.
FIG. 6 is a cross-sectional view for explaining warping caused by pressure-molding of the positive electrode layer in the all-solid-state lithium ion secondary battery when the positive electrode current collector and the positive electrode layer have high adhesion according to the present invention.
FIG. 7 is a cross-sectional view for explaining the principle of suppressing warping of the all-solid-state lithium ion secondary battery according to the present invention.
FIG. 8 is an enlarged perspective view around the vicinity of the surface of the positive electrode (negative electrode) current collector in the all-solid-state lithium ion secondary battery, the positive electrode current collector being made of etched aluminum according to the present invention.
FIG. 9 is an enlarged perspective view around the vicinity of the surface of the positive electrode (negative electrode) current collector in the all-solid-state lithium ion secondary battery, the negative electrode current collector being made of roughened copper according to the present invention.
FIG. 10 is a side view for explaining a 90° peel test before peeling.
FIG. 11 is a side view for explaining the 90° peel test during peeling.
FIG. 12 is a side view for explaining the 90° peel test after peeling.
FIG. 13 shows a photograph of the all-solid-state lithium ion secondary battery according to comparative example 1.
FIG. 14 shows a photograph of the all-solid-state lithium ion secondary battery according to example 1 of the present invention.

### Description of Embodiment

An all-solid-state secondary battery according to an embodiment of the present invention will be described below in accordance with the accompanying drawings. In the present embodiment, the all-solid-state secondary battery is exemplified by an all-solid-state secondary battery containing a solid electrolyte having lithium ion conductivity, that is, an all-solid-state lithium ion secondary battery.

The basic configuration of the all-solid-state lithium ion secondary battery according to the present embodiment will be first described below.

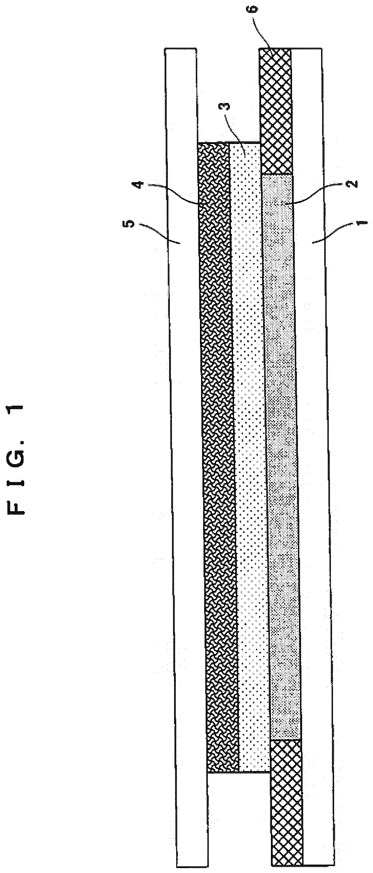

As shown in FIG. 1, the all-solid-state lithium ion secondary battery includes a lithium-ion-conductivity solid electrolyte layer (which, hereinafter, will be simply referred to as a solid electrolyte layer 3) disposed (stacked) between a positive electrode layer 2 and a negative electrode layer 4. A positive electrode current collector 1 is disposed (stacked) on the opposite surface of the positive electrode layer 2 from the solid electrolyte layer 3 while a negative electrode current collector 5 is disposed (stacked) on the opposite surface of the negative electrode layer 4 from the solid electrolyte layer 3. The positive electrode layer 2 and the negative electrode layer 4 naturally act as electrodes, that is, electrode layers. Moreover, the positive electrode layer 2 and the negative electrode layer 4 both contain a sulfide inorganic solid electrolyte, which will be specifically described later. The positive electrode layer 2, the solid electrolyte layer 3, and the negative electrode layer 4 are all made of powder materials. An insulating film 6 may be disposed around the circumference of the positive electrode layer 2.

The present invention is set out in the appended claims.

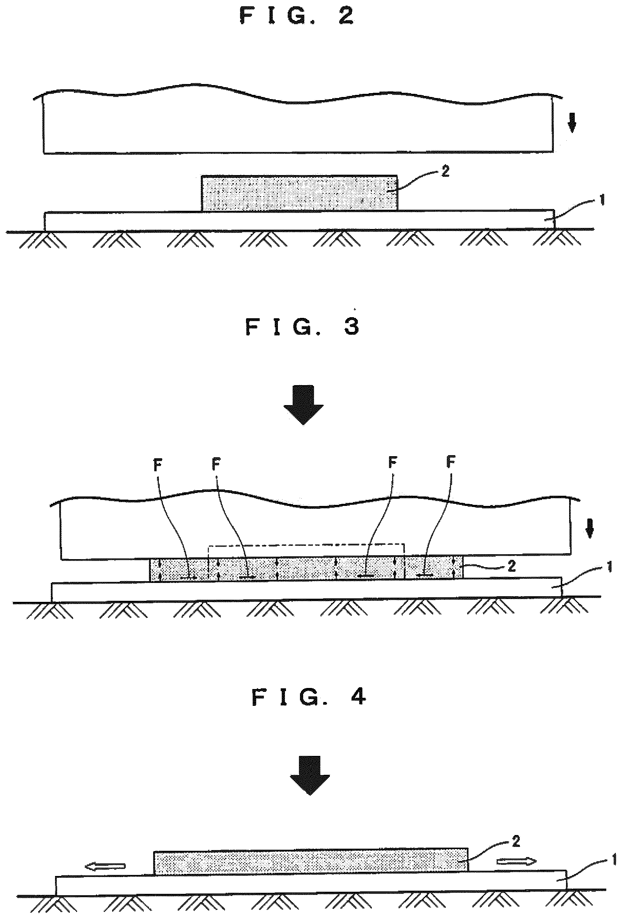

As shown in FIG. 2, the positive electrode layer 2 disposed on the surface of the positive electrode current collector 1 is pressure-molded. Thus, as shown in FIG. 3, the positive electrode layer 2 tends to be compressed in the thickness (stacking) direction and to expand in the width direction but cannot be expanded in the width direction because of a friction force F applied opposite to the width direction from the positive electrode current collector 1. This generates a residual stress for expansion in the width direction on the positive electrode layer 2, but as shown in FIG. 4, the pressure-molded positive electrode layer 2 becomes free of the residual stress so as to tend to be expanded in the width direction.

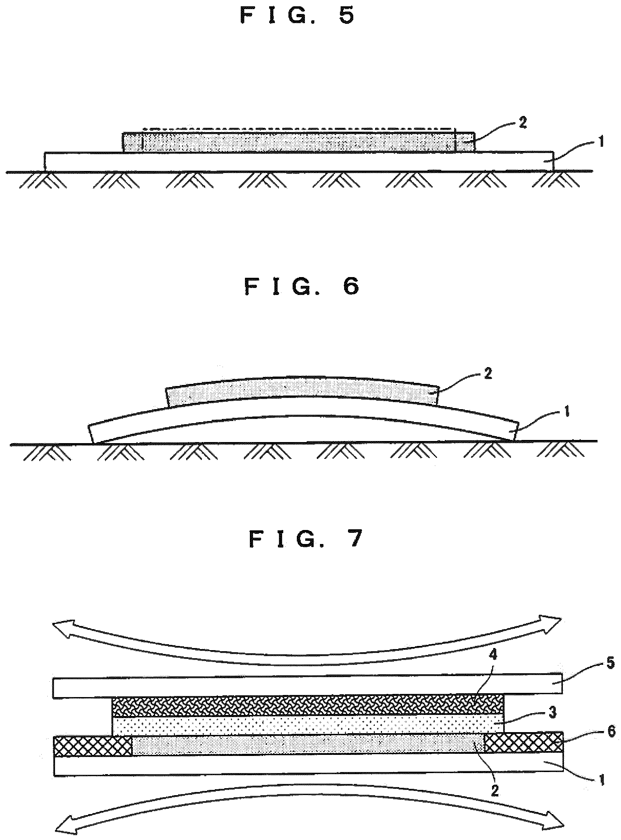

If the peel strength of the positive electrode current collector 1 relative to the sulfide inorganic solid electrolyte in a 90° peel test is smaller than 0.2 N/mm, adhesion is low between the positive electrode current collector 1 and the positive electrode layer 2 (containing the sulfide inorganic solid electrolyte). In this case, as shown in FIG. 5, the positive electrode layer 2 expanding so as to slide on the surface of the positive electrode current collector 1 does not affect the shape of the positive electrode current collector 1. On the other hand, if the peel strength of the positive electrode current collector 1 relative to the sulfide inorganic solid electrolyte in a 90° peel test is not smaller than 0.2 N/mm, adhesion is high between the positive electrode current collector 1 and the positive electrode layer 2. In this case, as shown in FIG. 6, the positive electrode layer 2 expands while digging into the surface of the positive electrode current collector 1. This causes a warp of the positive electrode current collector 1. The description holds true for the negative electrode current collector 5 and the negative electrode layer 4, which are not shown, as well as the positive electrode current collector 1 and the positive electrode layer 2.

According to the present invention, as shown in FIG. 7, a warp of the positive electrode current collector 1 and the positive electrode layer 2 and a warp of the negative electrode current collector 5 and the negative electrode layer 4 cancel each other so as to suppress warping of the overall all-solid-state lithium ion secondary battery.

The detailed configuration of the all-solid-state lithium ion secondary battery will be described below.

The positive electrode layer 2 contains a mixture of a positive-electrode active material and a lithium-ion-conductivity solid electrolyte. The weight ratio between the positive-electrode active material and the lithium-ion-conductivity solid electrolyte in the mixture is, for example, 7:3. In this case, the positive-electrode active material is an ordinary material used in the battery field, for example, lithium-nickel complex oxide (LiNiₓM₁₋ₓO₂; M is at least one element selected from Co, Al, Mn, V, Cr, Mg, Ca, Ti, Zr, Nb, Mo, and W), lithium cobaltate (LiCoO₂), lithium nickelate (LiNiO₂), or lithium manganate (LiMnO₂).

The negative electrode layer 4 contains a mixture of a negative-electrode active material and a lithium-ion-conductivity solid electrolyte. The weight ratio between the negative-electrode active material and the lithium-ion-conductivity solid electrolyte in the mixture is, for example, 6:4. In this case, the negative-electrode active material is an ordinary powder or foil material used in the battery field, for example, a carbon material such as natural graphite, artificial graphite, graphite carbon fibers, and resin baked carbon, silicon, tin, lithium, oxide, sulfide, nitrides or an alloy regardless of the shape of the material.

In this case, the lithium-ion-conductivity solid electrolyte for the positive electrode layer 2, the solid electrolyte layer 3, and the negative electrode layer 4 is, for example, an organic compound, an inorganic compound, a material containing organic and inorganic compounds, or an ordinary material used in the field of lithium ion batteries. For example, sulfides such as Li₂S-P₂S₅ of inorganic compounds have higher ionic conductance than other inorganic compounds.

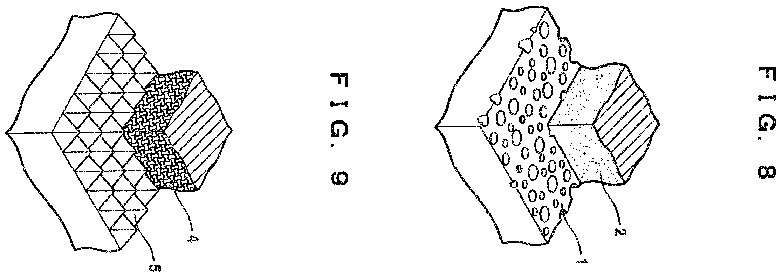

The positive electrode current collector 1 and the negative electrode current collector 5 are made of materials such as tin on an untreated surface, etched aluminum (FIG. 8) on a surface where multiple spongiform pores are formed by etching, and roughened copper on a surface where multiple low pyramids are formed (FIG. 9). These materials are shaped like a plate, foil, a film, or a metal foil composite. The metal foil composite is a composite which is coated metallic foil, for example, stainless foil coated with carbon. The positive electrode current collector 1 and the negative electrode current collector 5 may be made of the same material or different materials. The positive electrode current collector 1 and the negative electrode current collector 5 achieve a high peel strength (at least 0.2 N/mm) relative to the sulfide inorganic solid electrolyte in a 90° peel test.

A 90° peel test for measuring the peel strength of the positive electrode current collector (negative electrode current collector) relative to the sulfide inorganic solid electrolyte will be described below.

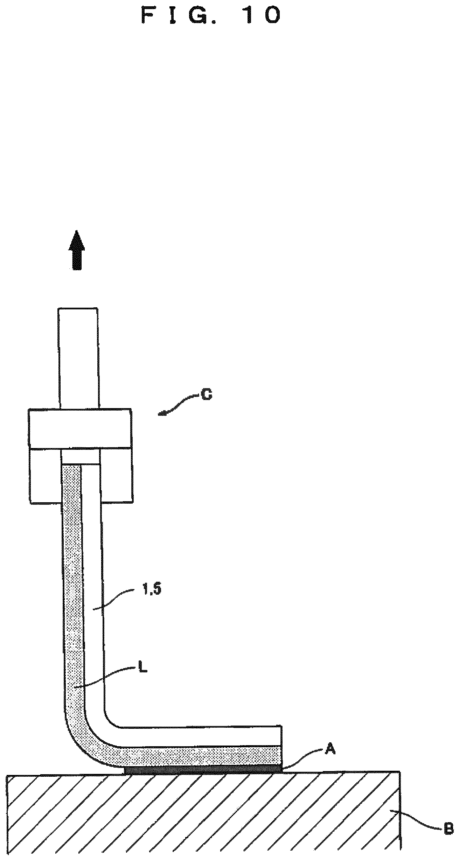

As shown in FIG. 10, the current collector 1 or 5 (positive electrode current collector 1 or negative electrode current collector 5) with a size of 50 mm (width direction) × 100 mm (longitudinal direction) had an Li₂S-P₂S₅ layer L of 14 mg/cm² with an even thickness formed. The thus obtained collector was pressed into a test piece with 300 MPa in the thickness (stacking) direction.

The reasons why the test piece included the Li₂S-P₂S₅ layer L (not made of the same material as the positive electrode layer 2 or the negative electrode layer 4) in the peel test will be discussed below.

Pressure molding on the same material (hereinafter, will be referred to as an electrode composite material) as the positive electrode layer 2 or the negative electrode layer 4 reduces binding strength among fine particles. The binding strength is smaller than adhesion between the layer made of the electrode composite material and the current collector 1 or 5. Thus, if the test piece includes the layer made of the electrode composite material, the layer made of the electrode composite material is broken (may be called delamination) in a peel test. This does not cause peeling between the layer made of the electrode composite material and the current collector 1 or 5. Thus, a value measured by the peel test is not a peel strength between the layer made of the electrode composite material and the current collector 1 or 5 but a delamination strength of layer made of the electrode composite material.

Furthermore, the peel test is to be precisely called a 90° peel test and thus the layer is peeled in the thickness (stacking) direction. Thus, if the test piece includes the layer made of the electrode composite material, the layer made of the electrode composite material undergoes delamination in a peel test. On the other hand, as shown in FIG. 6, the actual all-solid-state lithium ion secondary battery tends to expand in the width direction instead of the thickness (stacking) direction, thereby preventing delamination of an electrode material. Thus, it is assumed that the current collector 1 or 5 is bonded with equal adhesion to any one of the layer made of the electrode composite material and the Li₂S-P₂S₅ layer L.

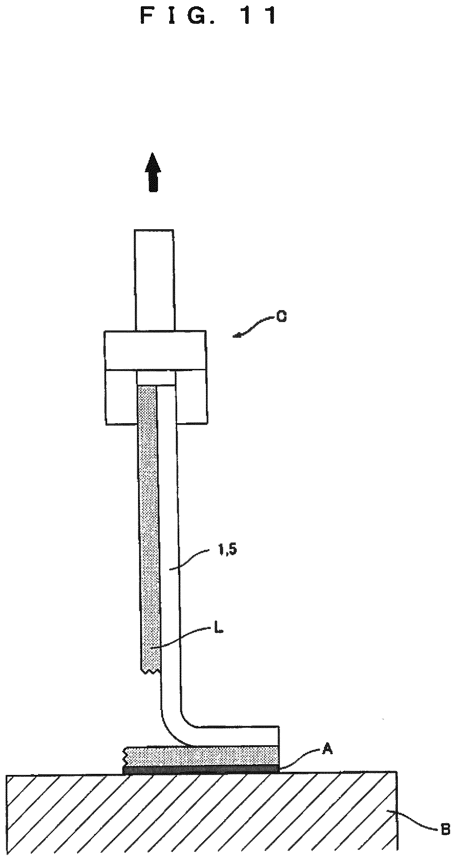

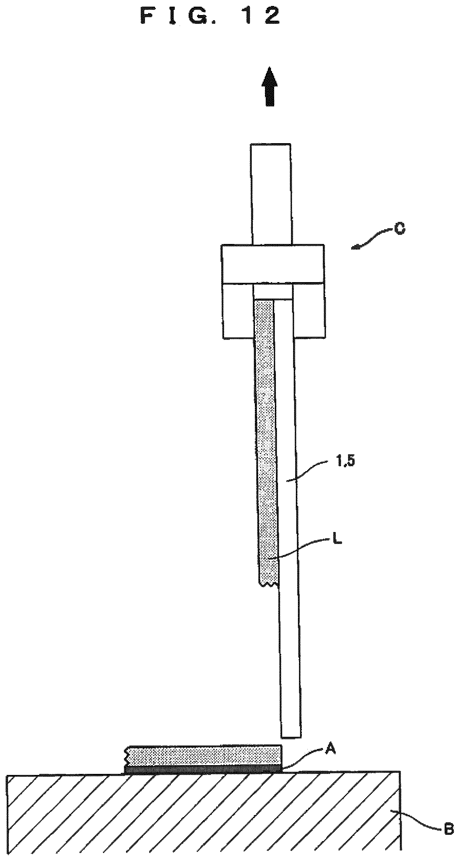

One end of the Li₂S-P₂S₅ layer L (in the longitudinal direction) of the test piece is fixed to a testing stand B with adhesive A while the other end of the test piece (in the longitudinal direction) is pulled by a chuck C. The pulling direction of the chuck C is always orthogonal to the surface of the testing stand B. Thus, as shown in FIG. 11, the Li₂S-P₂S₅ layer L with one end fixed to the testing stand B and the other end pulled by the chuck C is broken sometime. After that, the Li₂S-P₂S₅ layer L fixed to the testing stand B and the current collector 1 or 5 start peeling off from each other. At this point, a load is measured by the chuck C. At the completion of peeling as shown in FIG. 12, the measurement is also completed.

The mean value of loads thus obtained by the measurement is divided by the widthwise length of the test piece to determine the peel strength of a 90° peel test.

A method of manufacturing the all-solid-state lithium ion secondary battery will be described below.

First, the positive electrode layer 2 is formed on the surface of the positive electrode current collector 1 by a dry deposition method. Subsequently, the solid electrolyte layer 3 is formed on the opposite surface of the positive electrode layer 2 from the positive electrode current collector 1 by the dry deposition method. After that, the negative electrode layer 4 is formed on the opposite surface of the solid electrolyte layer 3 from the positive electrode layer 2 by the dry deposition method. The negative electrode current collector 5 is then stacked on the opposite surface of the negative electrode layer 4 from the solid electrolyte layer 3. A pressure is applied from the positive electrode current collector 1 and the negative electrode current collector 5 in the thickness (stacking) direction so as to apply a pressure of 98kN/cm² (10 tf/cm², 980 MPa) to the positive electrode layer 2. The all-solid-state lithium ion secondary battery is thus fabricated.

The all-solid-state lithium ion secondary battery allows a warp of the positive electrode current collector 1 and the positive electrode layer 2 and a warp of the negative electrode current collector 5 and the negative electrode layer 4 to cancel each other in a single cell, thereby suppressing warping even in a single cell.

An all-solid-state lithium ion secondary battery according to a specific example of the embodiment and an all-solid-state lithium ion secondary battery according to a comparative example will be described below. The example and the comparative example satisfy the following conditions:
(1) The positive electrode layer 2 measuring 50 mm per side contained LiNi_{0.8}Co_{0.15}Al_{0.05}O₂ (particle diameter: 6 µm) as a positive-electrode active material and Li₂S (80 mol%) - P₂S₅ (20 mol%) as a lithium-ion-conductivity solid electrolyte.
(2) The solid electrolyte layer 3 measuring 54 mm per side contained Li₂S (80 mol%) - P₂S₅ (20 mol%).
(3) The negative electrode layer 4 measuring 54 mm per side contained graphite (particle diameter: 25 µm) as a negative -electrode active material and Li₂S (80 mol%) - P₂S₅ (20 mol%) as a lithium-ion-conductivity solid electrolyte.

### [Comparative Example 1]

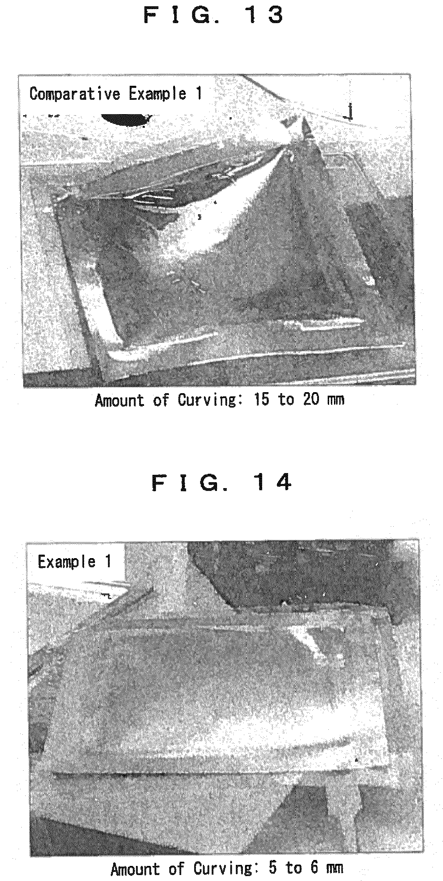

The positive electrode current collector was made of etched aluminum (high adhesion) while the negative electrode current collector was made of electrolytic copper foil (low adhesion). In the all-solid-state lithium ion secondary battery according to comparative example 1, the amount of curving caused by warping was 15 to 20 mm (FIG. 13).

### [Comparative Example 2]

The positive electrode current collector was made of stainless foil (low adhesion) while the negative electrode current collector was made of roughened copper (high adhesion). In the all-solid-state lithium ion secondary battery according to comparative example 2, the same amount of curving (not shown) was caused by warping as in comparative example 1.

### Example 1

The positive electrode current collector 1 was made of etched aluminum (high adhesion) while the negative electrode current collector was made of roughened copper (high adhesion). In the all-solid-state lithium ion secondary battery according to example 1, the amount of curving caused by warping could be suppressed to 5 to 6 mm, which is one third that of the comparative example (FIG. 14).

### Example 2

The positive electrode current collector 1 was made of tin (high adhesion) while the negative electrode current collector 5 was made of roughened copper (high adhesion). In the all-solid-state lithium ion secondary battery according to example 2, the amount of curving caused by warping could be suppressed as in example 1, although not shown.

As is evident from comparison with the all-solid-state lithium ion secondary batteries according to the examples and comparative examples in this way, warping even in a single cell could be suppressed by the all-solid-state lithium ion secondary battery according to the example.

In the embodiment and examples, the all-solid-state lithium ion secondary battery was described as an example of an all-solid-state secondary battery. The present invention is not limited to all-solid-state lithium ion secondary batteries, as long as it is an all-solid-state secondary battery.

In the embodiment and examples, the specific materials of the positive electrode current collector 1 and the negative electrode current collector 5 were described. The present invention is not limited to these materials as long as the peel strength of the positive electrode current collector 1 and the negative electrode current collector 5 relative to the sulfide inorganic solid electrolyte in a 90° peel test is at least 0.2 N/mm.

## Claims

1. An all-solid-state secondary battery comprising:
a positive electrode layer (2) and a negative electrode layer (4) that are disposed on a positive electrode current collector (1) and a negative electrode current collector (5), respectively, and are pressurized thereon; and
a solid electrolyte layer (3) interposed between the positive electrode layer (2) and the negative electrode layer (4),
**characterized in that**
the positive electrode layer (2) and the negative electrode layer (4) contain a sulfide inorganic solid electrolyte, and the positive electrode current collector (1) and the negative electrode current collector (5) have a peel strength of at least 0.2 N/mm relative to the sulfide inorganic solid electrolyte layer (L) in a 90° peel test, wherein, for the 90° peel test, the positive electrode current collector (1) or the negative electrode current collector (5) is provided with a layer of the sulfide inorganic solid electrolyte of even thickness and the thus obtained collector is pressed into a test piece with a force in the thickness (stacking) direction of 300 MPa,
the solid electrolyte layer (3) contains a sulfide inorganic solid electrolyte,
the positive electrode current collector (1) is a composite which is a coated metallic foil or is made of one of tin and etched aluminum, and
the negative electrode current collector (5) is made of roughened copper.

## Patentansprüche

1. Festkörper-Sekundärbatterie, die umfasst:
eine positive Elektrodenschicht (2) und eine negative Elektrodenschicht (4), die auf einem positiven Elektrodenstromkollektor (1) bzw. einem negativen Elektrodenstromkollektor (5) angeordnet und darauf unter Druck gesetzt sind; und
eine Festelektrolytschicht (3), die zwischen der positiven Elektrodenschicht (2) und der negativen Elektrodenschicht (4) angeordnet ist,
**dadurch gekennzeichnet, dass**
die positive Elektrodenschicht (2) und die negative Elektrodenschicht (4) einen anorganischen Sulfid-Festelektrolyten enthalten und der positive Elektrodenstromkollektor (1) und der negative Elektrodenstromkollektor (5) eine Abziehfestigkeit von wenigstens 0,2 N/mm bezogen auf die anorganische Sulfid-Festelektrolytschicht (L) in einem 90° Abziehtest haben, wobei für den 90° Abziehtest der positive Elektrodenstromkollektor (1) oder der negative Elektrodenstromkollektor (5) mit einer Schicht des anorganischen Sulfid-Festelektrolyten von gleichmäßiger Dicke bereitgestellt wird und der so gewonnene Kollektor mit einer Kraft in Dicken-(Stapel-) Richtung von 300 MPa in ein Prüfstück gepresst wird,
die Festelektrolytschicht (3) einen anorganischen Sulfid-Festelektrolyten enthält,
der positive Elektrodenstromkollektor (1) ein Verbundmaterial ist, das eine beschichtete Metallfolie ist oder aus Zinn oder geätztem Aluminium besteht, und
der negative Elektrodenstromkollektor (5) aus aufgerauhtem Kupfer besteht.

## Revendications

1. Batterie rechargeable tout solide comprenant:
une couche d'électrode positive (2) et une couche d'électrode négative (4) qui sont disposées sur un collecteur de courant d'électrode positive (1) et un collecteur de courant d'électrode négative (5), respectivement, et sont mises sous pression sur celui-ci; et
une couche d'électrolyte solide (3) interposée entre la couche d'électrode positive (2) et la couche d'électrode négative (4),
**caractérisée en ce que**
la couche d'électrode positive (2) et la couche d'électrode négative (4) contiennent un électrolyte solide inorganique sulfuré, et le collecteur de courant d'électrode positive (1) et le collecteur de courant d'électrode négative (5) ont une résistance à l'arrachement d'au moins 0,2 N/mm par rapport à la couche d'électrolyte solide inorganique sulfuré (L) dans un test d'arrachement à 90°, dans lequel, pour le test d'arrachement à 90°, le collecteur de courant d'électrode positive (1) ou le collecteur de courant d'électrode négative (5) sont pourvus d'une couche de l'électrolyte solide inorganique sulfuré d'épaisseur égale et le collecteur ainsi obtenu est comprimé dans une éprouvette avec une force dans le sens de l'épaisseur (empilement) de 300 MPa,
la couche d'électrolyte solide (3) contient un électrolyte solide inorganique sulfuré,
le collecteur de courant d'électrode positive (1) est un composite qui est une feuille métallique revêtue ou est constitué d'aluminium gravé ou d'étain, et
le collecteur de courant d'électrode négative (5) est en cuivre rugueux.
